# EUROPEAN PATENT APPLICATION

(11) **EP 1 283 389 A1**
(43) Date of publication of application: **12.02.2003**
(21) Application number: 01119143.4
(22) Date of filing: 08.08.2001
(51) Int. Cl.: F16M 13/02, A47B 96/06, B65D 69/00

(54) **Corner fixing block**

(71) Applicant: EVERSPRING INDUSTRY CO. LTD., Sec. 1, Tu Cheng City, Taipei Hsien (TW)
(72) Inventor: Kao, Eric, Sec1, Tu-Cheng City, Taipei Hsien (TW)
(74) Representative: Viering, Jentschura & Partner

(57) **Abstract**

A corner fixing block having at least two fixing blocks of identical structure and a device body is disclosed. The first supporting surfaces of two fixing blocks are assembled in parallel, or two second supporting surfaces are assembled in parallel. Two fixing surfaces of two fixing blocks are used to form another fixing surface with a concave or a convex portion having a 90 degrees angle.

## Description

### FIELD OF THE INVENTION

The present invention relates to a corner fixing block, and especially to a corner fixing block, wherein supporting surfaces of two fixing blocks are assembled in parallel, or two second supporting surfaces are assembled in parallel. Two fixing surfaces of two fixing blocks are used to form another fixing surface with a concave or a convex portion having a 90 degrees angle.

### BACKGROUND OF THE INVENTION

In general, an object, such as probes, lamps, hooks, etc. are locked or sticky to a plane wall or a posts. However, if it is desired to attach to an object with concave or convex portions (such as beams, ceilings, etc) or a wall. It is confined by the space relation. Therefore, a large space is necessary and thus the space can not be used effectively. Furthermore, It is often the function of the device is confined.

Therefore, it is apparent that the prior art way for fixing a device to an object with concave or convex portions or a wall is not preferred. Therefore, there is an eager demand for a novel design which can resolve the aforesaid problem.

### SUMMARY OF THE INVENTION

Accordingly, the primary object of the present invention is to provide a corner fixing block, wherein a device body can be installed to a fixing object with a vertical protruding portion or a wall.

Another object of the present invention is to provide a corner fixing block, wherein a device body can be installed to a fixing object with a vertical collapsed portion or a wall.

Another object of the present invention is to provide a corner fixing block, wherein in the assembly of the fixing blocks, a plurality of fixing blocks connected in parallel are used. Thus, the device is suitable for an object having many convex or concave portions with an 90 degree angle.

To achieve above objects, the present invention provides a corner fixing block comprises:
Two fixing blocks having an identical structure, the fixing block comprising:
   A fixing surface;
   A first supporting surface;
   A second supporting surface;
   A device surface;
   A locking surface having a hole penetrating the locking surface and the fixing surface; and
   A device body;
   The two fixing blocks serves to connect the supporting surfaces in parallel, then the device body is locked to the two device bodies of two fixing blocks by screws; screws pass the holes on the locking surfaces of the two fixing blocks; the two fixing surfaces of the fixing blocks are locked to a fixing object having a vertical concave bending section (such as a beam) or a wall. the second supporting surfaces of two fixing blocks are connected in parallel; a screw serves to lock the device body to the two device surfaces; the device body is fixed to the fixing blocks; screws pass through the holes of the two locking surfaces of the fixing blocks; then the two fixing surfaces of the fixing blocks are locked to a retaining object having a portion protruded with 90 degree or a wall. Protruding hooks are installed to fix the device body to the device surfaces of the two fixing blocks. In the assembly of the fixing blocks, a plurality of fixing blocks connected in parallel are used.

The various objects and advantages of the present invention will be more readily understood from the following detailed description when read in conjunction with the appended drawing.

### BRIEF DESCRIPTION OF THE DRAWINGS

Fig. 1 is an exploded perspective view of the embodiment about the corner fixing block of the present invention
Fig. 1B is an assembly view of the embodiment about the corner fixing block of the present invention.
Fig. 2A is an exploded perspective view of the embodiment about the corner fixing block of the present invention.
Fig. 2B is an assembly view of the embodiment about the corner fixing block of the present invention.
Fig. 3A is a cross sectional view of the first preferred embodiment of the corner fixing block of the present invention.
Fig. 3B is a cross sectional view of the second preferred embodiment of the corner fixing block of the present invention.
Fig. 4A shows a locking way of the corner fixing block of the present invention.
Fig. 4B is a locking way of the corner fixing block of the present invention by a protruding hooks for suiting various installing ways of device bodies 3a.
Fig. 5 shows the fixing blocks connected in parallel in the corner fixing block of the present invention.

### DETAILED DESCRIPTION OF THE PREFERRED EMBODIMENTS

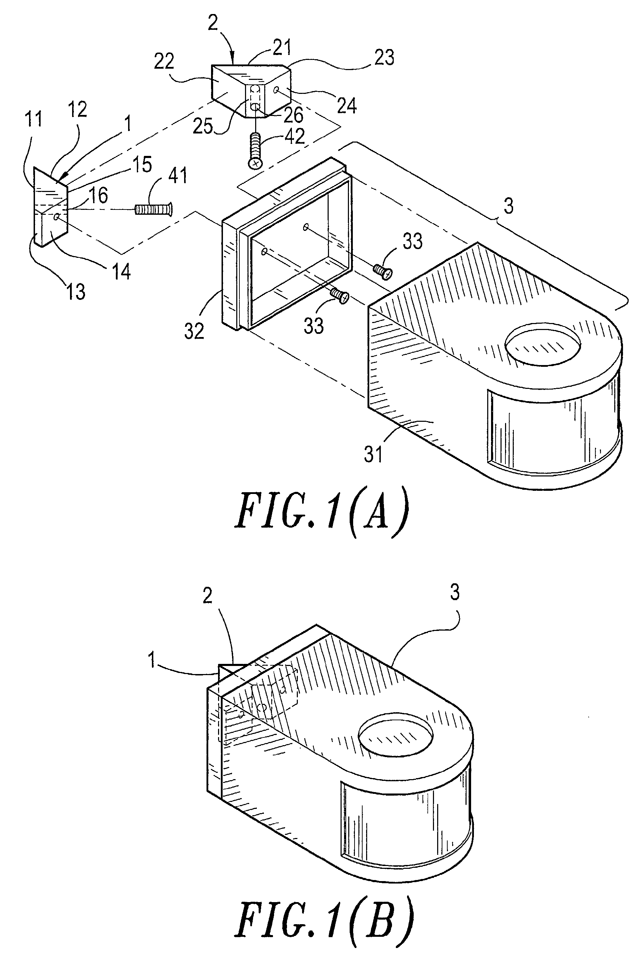

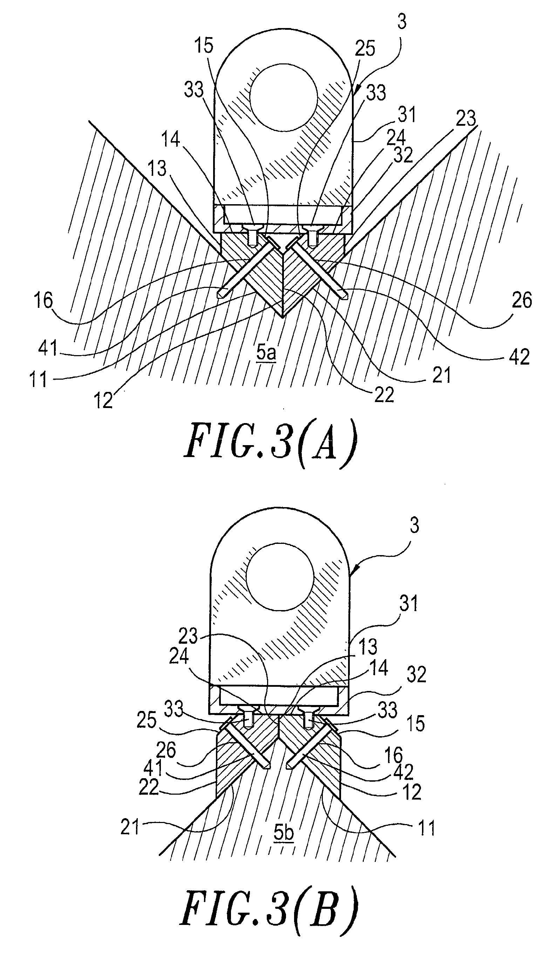

Referring to Figs. 1A and 1B, an exploded perspective view of the embodiment about the corner fixing block of the present invention is illustrated in Fig. 1A, and the assembly view of the embodiment about the corner fixing block of the present invention is illustrated in Fig. 1B. The present invention is formed by two fixing blocks 1 and 2, and a device body 3. The two fixing blocks 1 and 2 include fixing surfaces 11 and 21, first supporting surfaces 12 and 22, second supporting surfaces 13 and 23, device surfaces 14 and 24 and locking surfaces 15 and 25. The locking surfaces 15 and 25 are installed with holes 16 and 26. The holes 16 and 26 penetrates through the locking surfaces 15 and 25 and the fixing surfaces 11 and 21. The first supporting surfaces 12 and 22 are connected in parallel. A screw 3 locks the device body 3 to the device surfaces 14 and 24. Therefore, the device body 3 can be fixed to the fixing blocks 1 and 2. Then, screws 41 and 42 pass through the two locking surfaces 15 and 25 of the fixing blocks 1 and 2. Then the two fixing surfaces 11 and 21 of the fixing blocks 1 and 2 are locked to a retaining object 5a having a concave portion with a 90 degree angle or a wall (referring to Fig. 3A).

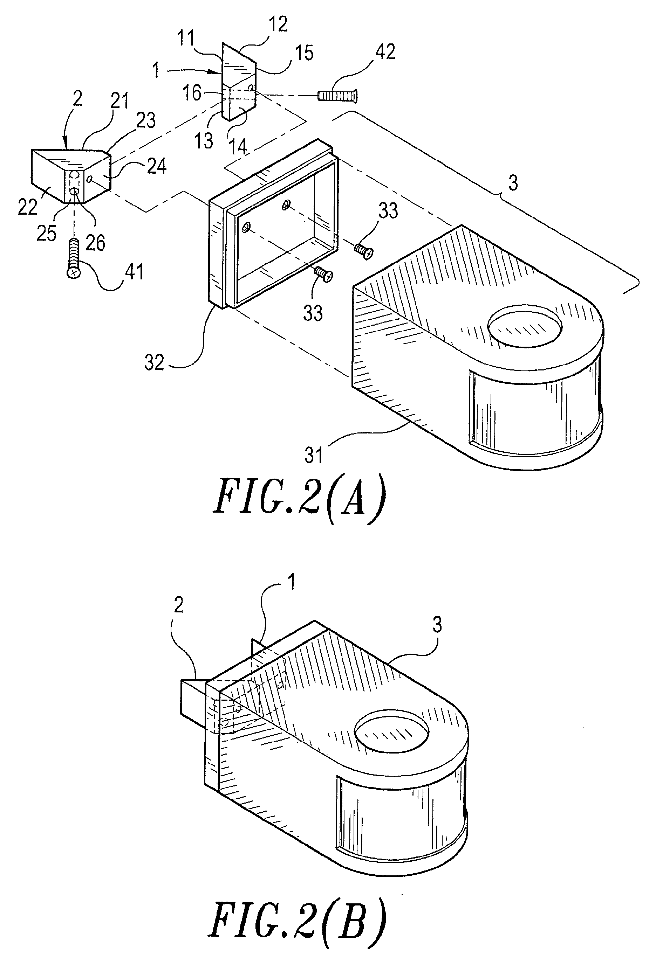

Referring to Figs. 2A and 2B, Fig. 2A is an exploded perspective view of the embodiment about the corner fixing block of the present invention; and Fig. 2B is an assembly view of the embodiment about the corner fixing block of the present invention. The second supporting surfaces 13 and 23 of two fixing blocks 1 and 2 are connected in parallel. A screw 33 serves to lock the device body 3 to the two device surfaces 14 and 24. The device body 3 is fixed to the fixing blocks 1 and 2. Then, screws 41 and 42 pass through the holes 16 and 36 of the two locking surfaces 15 and 25 of the fixing blocks 1 and 2. Then the two fixing surfaces 11 and 21 of the fixing blocks 1 and 2 are locked to a retaining object 5b having a portion protruded with 90 degree angle or a wall (referring to Fig. 3B).

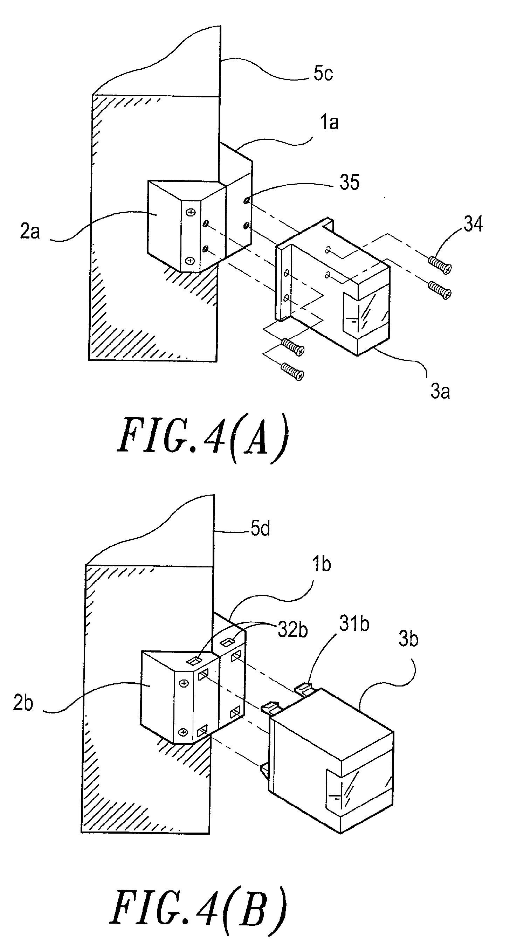

Referring to Figs. 4A and 4B, Fig. 4A shows a locking way of the corner fixing block of the present invention. Fig. 4B is a locking way of the corner fixing block of the present invention by a protruding hooks for suiting various installing ways of device bodies 3a. The fixing blocks 1a and 2a are matchable to the hole 35 of the device body 3a. By a screw 34, the device body 3a is fixed to a fixing object 5c. Another device body 3b is fixed to the fixing blocks 1b and 2b. In that, a device body 3b is designed with protruding hooks 31b. By positions of the fixing blocks 1b and 2b with respect to the hooks 31b, when grooves 32b are installed. the hooks 31b of the device body 3b is placed to the grooves 32b of the fixing blocks 1b and 2b, then the device body 3b is fixed to the fixing object 5d.

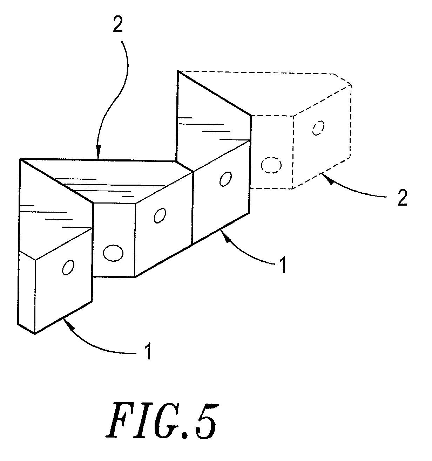

Referring to Fig. 5, the fixing blocks connected in parallel in the corner fixing block of the present invention is illustrated. In the two assembly ways, first and second ways, the corner fixing block can be used to be connected with one of the fixing blocks 1 or 2 in parallel.

As comparing with the prior art, the present invention has the following advantages:
(1) A device body can be installed to a fixing object with a vertical protruding portion or a wall.
(2) A device body can be installed to a fixing object with a vertical collapsed portion or a wall.
(3) The operator may be used a device by installing with the present invention.
(4) In using the present invention, the fixing blocks are unnecessary to be updated. It is only necessary to remove the device body, and thus, the fixing blocks can be used repeatedly and the cost is reduced.
(5) The cost in molding can be reduced.

The present invention are thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A corner fixing block comprising:
two fixing blocks having an identical structure, the fixing block comprising:
a fixing surface;
a first supporting surface;
a second supporting surface;
a device surface;
a locking surface having a hole penetrating the locking surface and the fixing surface; and
a device body;
**characterized in that**: the two fixing blocks serves to connect the first supporting surfaces in parallel, then the device body is locked to the two device bodies of two fixing blocks by screws; screws pass through the holes on the locking surfaces of the two fixing blocks; the two fixing surfaces of the fixing blocks are locked to a fixing object having a vertical concave bending section (such as a beam) or a wall.

2. The corner fixing block as claimed in claim 1, wherein the second supporting surfaces of two fixing blocks are connected in parallel; a screw serves to lock the device body to the two device surfaces; the device body is fixed to the fixing blocks; screws pass through the holes of the two locking surfaces of the fixing blocks; then the two fixing surfaces of the fixing blocks are locked to a retaining object having a portion protruded with 90 degree or a wall.

3. The corner fixing block as claimed in claim 1, wherein protruding hooks are installed to fix the device body to the device surfaces of the two fixing blocks.

4. The corner fixing block as claimed in claim 1, wherein in the assembly of the fixing blocks, a plurality of fixing blocks connected in parallel are used.
